# EUROPÄISCHE PATENTSCHRIFT

(11) **EP 2 553 799 B1**
(45) Veröffentlichungstag und Bekanntmachung des Hinweises auf die Patenterteilung: **15.11.2017**
(21) Anmeldenummer: 11711786.1
(22) Anmeldetag: 30.03.2011
(51) Int. Cl.: H02M 7/483, H02M 5/293, H02M 5/297

(54) **TRANSFORMATORLOSER MODULARER DIREKTUMRICHTER MIT VERTEILTEN ENERGIESPEICHERN**
TRANSFORMERLESS MODULAR AC/AC CONVERTER WITH DISTRIBUTED ENERGY STORAGE
CONVERTISSEUR CA/CA DIRECT MODULAIRE SANS TRANSFORMATEUR

(30) Priorität: 01.04.2010 DE 102010013862
(43) Veröffentlichungstag der Anmeldung: 06.02.2013
(73) Patentinhaber: Siemens Aktiengesellschaft, 80333 München (DE)
(72) Erfinder: MERTENS, Axel, 30800 Wedemark / OT Bissendorf (DE); BARUSCHKA, Lennart, 30900 Wedemark (DE)
(86) Internationale Anmeldenummer: PCT/EP2011/001591
(87) Internationale Veröffentlichungsnummer: WO 2011/120679

(56) Entgegenhaltungen:
- US-A- 5 642 275
- US-A1- 2004 022 081
- US-A1- 2007 164 613
- GLINKA M ET AL: "A new ac/ac-multilevel converter family applied to a single-phase converter", POWER ELECTRONICS AND DRIVE SYSTEMS, 2003. PEDS 2003. THE FIFTH INTERN ATIONAL CONFERENCE ON SINGAPORE 17-20 NOV. 2003, PISCATAWAY, NJ, USA,IEEE, PISCATAWAY, NJ, USA, Bd. 1, 17. November 2003 (2003-11-17), Seiten 16-23, XP010694784, DOI: 10.1109/PEDS.2003.1282669 ISBN: 978-0-7803-7885-8
- JUN WEN ET AL: "Synthesis of Multilevel Converters Based on Singleand/or Three-Phase Converter Building Blocks", IEEE TRANSACTIONS ON POWER ELECTRONICS, INSTITUTE OF ELECTRICAL AND ELECTRONICS ENGINEERS, USA, vol. 23, no. 3, 1 May 2008 (2008-05-01), pages 1247-1256, XP011207414, ISSN: 0885-8993

## Beschreibung

Die Erfindung betrifft das Gebiet der elektrischen Energieversorgungstechnik. Die Erfindung betrifft insbesondere einen transformatorlosen Direktumrichter zur Verbindung eines ersten Dreileitungsnetzes mit einem zweiten Dreileitungsnetz gemäß dem Anspruch 1.

Mit einem transformatorlosen Direktumrichter kann elektrische Energie zwischen Leitungsnetzen transferiert werden, die z.B. unterschiedliche Nennspannungen oder, im Falle von Wechselspannung, unterschiedliche Frequenzen haben. Dies kann durch Verwendung von elektronische Halbleiterschalter aufweisenden Brückenmodulen ohne teure und aufwendige Transformatoren realisiert werden. Bereits bekannt ist z.B., die Zwischenkreise zweier Umrichter miteinander zu verbinden (back-to-back Konfiguration), wobei der erste Umrichter mit einem ersten Dreileitungsnetz verbunden ist und der zweite Umrichter mit einem zweiten Dreileitungsnetz. Kommt als Umrichter ein modularer Umrichter zum Einsatz, so sind hierfür insgesamt zwölf Brückenmodule oder Reihenanordnungen davon erforderlich. Ebenfalls wurde bereits vorgeschlagen, ein erstes Dreileitungsnetz über eine matrixartige Anordnung von neun Brückenmodulen oder Reihenanordnungen davon mit einem zweiten Dreileitungsnetz zu verbinden, siehe US 2004/0022081 A1. Weitere Direktumrichter nach dem Stand der Technik sind aus der wissenschaftlichen Veröffentlichung "Synthesis of Multilevel Converters Based on Single- and/or Three-Phase Converter Building Blocks" von Jun Wen und Keyue Smedley (XP011207414) bekannt. Der dort vorgestellte "Hexagram Converter" verwendet 3-Phasen-Module, wobei jedes Modul nur mit einem Stromversorgungsnetz verbunden ist. Der ebenfalls vorgestellte Stromrichter mit im Dreieck geschalteten Serienschaltungen von Einphasenmodulen ist nur an ein Stromversorgungsnetz angeschlossen. Er weist keine Anschlüsse für ein zweites Stromversorgungsnetz auf. Der Erfindung liegt daher die Aufgabe zugrunde, einfachere und kostengünstigere Kopplung und Direktumrichtung zwischen zwei Dreileitungsnetzen zu ermöglichen.

Diese Aufgabe wird durch die im Anspruch 1 angegebene Erfindung gelöst. Die Unteransprüche geben vorteilhafte Weiterbildungen der Erfindung an.

Die Erfindung ermöglicht auf elegante Weise und mit geringem schaltungstechnischem Aufwand eine einfache und kostengünstige Kopplung und Direktumrichtung zwischen zwei Dreileitungsnetzen. Als Dreileitungsnetz wird hierbei jede elektrische Verbindung eines elektrischen oder elektronischen Bauteils über drei Versorgungsenergie-führende Leitungen verstanden, wie z.B. ein elektromotorischer Antrieb, ein Energieversorgungsnetz oder ein elektrischer Generator. Mit dem erfindungsgemäßen Direktumrichter ist z.B. die Kopplung eines elektromotorischen Antriebs an ein Energieversorgungsnetz oder eines elektrischen Generators an ein Energieversorgungsnetz möglich. Selbstverständlich umfasst die Erfindung auch die Kopplung zweier Energieversorgungsnetze miteinander.

Mit der Topologie gemäß Anspruch 1 kann gegenüber Direktumrichtern gemäß dem Stand der Technik ein vereinfachter und kostengünstigerer Aufbau erzielt werden. Dort wird wie erwähnt eine Anordnung von mindestens neun Brückenmodulen oder Reihenanordnungen davon benötigt. Durch die gemäß Anspruch 1 vorgeschlagene Topologie aus sechs Brückenmodulen oder Reihenschaltungen von Brückenmodulen ist damit eine Verringerung des Hardwareaufwands um ein Drittel bei gleicher Funktionalität möglich. Bei Verwendung einer entsprechend großen Anzahl von Brückenmodulen in der Reihenschaltung entfällt zudem der Bedarf für entsprechende Eingangs- und Ausgangsfilter vollständig. Anwendungsgebiete der vorgeschlagenen Topologie sind beispielsweise große geschwindigkeitsgeregelte Antriebe, Generatoren mit variabler Drehzahl sowie der Bereich der Netzkopplung mit integriertem Blindleistungsausgleich.

Gemäß der Erfindung kann der Direktumrichter eine Reihenschaltung einer Mehrzahl von Brückenmodulen aufweisen. Die Verwendung einer Reihenschaltung einer Mehrzahl von Brückenmodulen erlaubt eine erhöhte Flexibilität hinsichtlich der Einstellung der Ausgangsspannung. Zudem wird die Ausfallsicherheit erhöht, da eine Mehrzahl von Brückenmodulen eine gewisse Redundanz beinhaltet. So kann beispielsweise bei einem internen Defekt eines Brückenmoduls der Reihenschaltung, z.B. einem Defekt an einem Zwischenkreis-Kondensator oder einer Batterie, dieses Brückenmodul über die Vollbrückenschaltung überbrückt werden. Der hierdurch verursachte Spannungsausfall kann durch die übrigen Brückenmodule der Reihenschaltung kompensiert werden, indem durch entsprechende Steuerung der elektronischen Halbleiterschalter der Brückenmodule pro Brückenmodul eine jeweils erhöhte Ausgangsspannung eingestellt wird.

In einer vorteilhaften Ausführung der Erfindung werden identische Brückengleichspannungen in allen Brückenmodulen verwendet.Bei entsprechend hoher Anzahl von Brückenmodulen ist eine feine Einstellung der resultierenden Ausgangsspannung einer Reihenschaltung solcher Brückenmodule möglich.

In einer vorteilhaften Weiterbildung der Erfindung können Brückenmodule mit unterschiedlichen Brückengleichspannungen verwendet werden. Hierdurch können Brückenmodule mit unterschiedlichen Nennspannungen verwendet werden. Der Begriff Nennspannung beschreibt die seitens der Bauteile maximal erlaubte Brückengleichspannung. Dies erlaubt bezüglich der einstellbaren Ausgangsspannungen der einzelnen Brückenmodule unterschiedliche Spannungsbereiche. Hierdurch ergibt sich eine verbesserte Flexibilität hinsichtlich der diskreten, einstellbaren Spannungswerte einer Reihenschaltung von Brückenmodulen. Im Vergleich zur Verwendung identischer Brückengleichspannungen in allen Brückenmodulen ist damit bei einer geringeren Anzahl von Brückenmodulen bereits eine feine Einstellung der resultierenden Ausgangsspannung der Reihenschaltung von Brückenmodulen möglich.

Hierdurch kann vorteilhaft nach Art eines sukzessiv approximierenden Digital-Analog-Wandlers die Ausgangsspannung der Reihenschaltung durch Kombination unterschiedlicher Spannungswerte verschiedener Brückenmodule kombiniert werden. Beispielsweise können die Nennspannungen von Brückenmodul zu Brückenmodul jeweils um den Faktor 2 erhöht werden, was eine Einstellbarkeit der Ausgangsspannung der Reihenschaltung nach dem Binärsystem erlaubt. Nach einem anderen Beispiel werden jeweils mehrere Brückenmodule verwendet, bei denen die Brückengleichspannungen bzw. Nennspannungen voneinander verschieden sind, allerdings mit geringeren Unterschieden. Kommen als Brückengleichspannungen beispielsweise 600 V und 800 V in einer Reihenschaltung zum Einsatz, so verringert sich die kleinste einstellbare Spannungsstufe auf 800 V - 600 V = 200 V.

Gemäß einer vorteilhaften Weiterbildung der Erfindung weist wenigstens ein Brückenmodul folgende Merkmale auf:
a) Das Brückenmodul weist einen ersten und einen zweiten Anschluss zur Verbindung mit einer Leitung des Energieversorgungsnetzes oder einem Anschluss eines weiteren Brückenmoduls auf,
b) das Brückenmodul weist vier elektronische Halbleiterschalter in Vollbrückenschaltung auf,
c) der erste und der zweite Anschluss des Brückenmoduls ist mit einander gegenüberliegenden Anschlusspunkten der Vollbrückenschaltung verbunden,
d) das Brückenmodul weist einen Kondensator auf, der mit den weiteren einander gegenüberliegenden Anschlusspunkten der Vollbrückenschaltung verbunden ist.

Die Vollbrückenschaltung erlaubt dabei variabel eine Vielzahl einstellbarer Schaltzustände, z.B. die Schaltung einer direkten Verbindung zwischen dem ersten und dem zweiten Anschluss des Brückenmoduls (Überbrücken des Brückenmoduls) oder ein Laden oder Entladen des Kondensators mit der jeweils gewünschten, über die Halbleiterschalter wählbaren Polarität. Durch entsprechende Ansteuerung der Halbleiterschalter über eine Steuerungseinrichtung, die z.B. pulsbreitenmodulierte Ansteuersignale ausgibt, ist eine relativ feinstufige Ladung und Entladung des Kondensators möglich.

Gemäß einer vorteilhaften Weiterbildung der Erfindung weist wenigstens ein Brückenmodul folgende Merkmale auf:
a) das Brückenmodul weist eine Batterie auf,
b) das Brückenmodul weist einen steuerbaren Gleichspannungswandler auf, dessen eine Anschlussseite parallel zum Kondensator angeschlossen ist und an dessen andere Anschlussseite die Batterie angeschlossen ist.

Dies erlaubt auf elegante Weise und mit geringem schaltungstechnischem Aufwand eine Einbindung einer Batterie in den Direktumrichter. Mit der Batterie bzw. einer Mehrzahl von Batterien bei Verwendung einer Mehrzahl von Brückenmodulen kann eine unterbrechungsfreie Stromversorgung mit wenig Aufwand integriert werden. Bei Einsatz des Direktumrichters an einem Stromversorgungsnetz lässt sich so beispielsweise die Bereitstellung einer Minutenreserve zur Netzstabilisierung realisieren. Mittels der Batterien der Brückenmodule ist eine Pufferung der Energieversorgung je nach Auslegung der Batterien auch für einen größeren Zeitraum möglich, z.B. während Zeiten geringerer Energieerzeugung eines Windenergieparks. In vergleichbarer Weise kann eine Solarzellenenergieversorgungseinrichtung vorteilhaft mit der genannten Einrichtung an ein Dreiphasennetz angekoppelt werden. Vorteilhaft kann über die Batterien eine Zwischenspeicherung der Energie für sonnenlichtarme Zeiten oder die Nacht erfolgen.

Die Batterie ist vorteilhaft als aufladbare Batterie ausgebildet, z.B. als Nickelmetallhydrid-Akkumulator, Blei-Akkumulator oder Lithiumpolymer-Akkumulator. Selbstverständlich können auch andere Akkumulator-Technologien eingesetzt werden.

Eine solche Ausführung des Brückenmoduls ermöglicht, die mit Hilfe der Batterie erzeugte Brückengleichspannung des Brückenmoduls unabhängig von der Batteriespannung konstant zu halten, und zwar durch entsprechende Steuerung des Gleichspannungswandlers. Hierdurch kann auch bei sinkender Batteriespannung eine konstante Ausgangsspannung aufrechterhalten werden. Als Brückenmodul sei in diesem Zusammenhang jegliche räumliche und bauliche Anordnung der genannten Elemente verstanden, unabhängig davon, ob die Elemente beispielsweise in einem Gehäuse zusammengefasst sind oder verteilt angeordnet sind. Beispielsweise kann die Batterie baulich getrennt von den übrigen Elementen des Brückenmoduls angeordnet sein. In einer vorteilhaften Weiterbildung der Erfindung ist die Batterie baulich in das Brückenmodul integriert.

Ein weiterer Vorteil ist, dass die Welligkeit des Leistungsbedarfs bzw. des durch das Brückenmodul fließenden Stroms im Wesentlichen von der Batterie entkoppelt werden kann. Es ist ein im Wesentlichen konstanter Stromfluss durch die Batterie möglich, d.h. die höherfrequenten Anteile im Energieversorgungsnetz können von der Batterie ferngehalten werden. Dies erhöht die potentielle Lebensdauer der Batterien erheblich.

Vorteilhaft kann eine Reihenschaltung von Brückenmodulen eingesetzt werden. Hierdurch kann eine direkte Reihenschaltung einer großen Anzahl von Batterien vermieden werden. Eine Integration einer Mehrzahl von Batterien ist dann über eine Mehrzahl der Brückenmodule, die jeweils eine eigene Batterie aufweisen, möglich. Dies vermeidet schaltungstechnischen Aufwand für gesonderte Balancier- oder Lade-/Entladeschaltungen für die Batterien und verringert damit den gesamten schaltungstechnischen Aufwand.

Vorteilhaft wird die Batteriespannung mit Rücksicht auf die Brückengleichspannung bzw. die Nennspannung des jeweiligen Brückenmoduls gewählt. Große Übersetzungsverhältnisse des Gleichspannungswandlers lassen sich somit vermeiden und der Wirkungsgrad optimieren. Im Fall unterschiedlicher NennSpannungen in den Brückenmodulen eines Umrichters unterscheiden sich dann auch die Spannungen der verwendeten Batterien voneinander.

Ein weiterer Vorteil der Erfindung ist, dass eine Abschaltung des Brückenmoduls über die Vollbrückenschaltung möglich ist. So kann etwa bei einem defekten Leistungshalbleiter die Abschaltung eines Brückenmoduls in einer Reihenschaltung von Brückenmodulen erfolgen. Über die verbleibenden Brückenmodule kann trotz Ausfall eines Brückenmoduls weiterhin die gewünschte Ausgangsspannung der Reihenschaltung konstant gehalten werden.

Ein weiterer Vorteil der Erfindung ist, dass ein Brückenmodul, dessen Batterie defekt ist, weiter in Betrieb bleiben kann. Im zeitlichen Mittel kann das Modul mit defekter Batterie zwar keine Energie liefern, es kann jedoch genutzt werden, um die Spannung über der Reihenschaltung von Brückenmodulen während eines Teils der Netzperiode zu erhöhen, und hilft so, die für einen ausfallsicheren Betrieb des Umrichters nötige Überdimensionierung der Nennspannungen der einzelnen Brückenmodule zu reduzieren.

Durch die beiden genannten Maßnahmen können besonders ausfallsichere unterbrechungsfreie Stromversorgungen bzw. Umrichtersysteme geschaffen werden.

Ein weiterer Vorteil der Erfindung ist, dass durch den Gleichspannungswandler unterschiedliche Spannungsniveaus der Batterie, die sich je nach Ladezustand einstellen, kompensiert werden können. Hierdurch kann das Brückenmodul eine gewünschte konstante Ausgangsspannung erzeugen. Somit kann auch bei Verwendung der Brückenmodule in einer Reihenschaltung, z.B. in einem Umrichter, eine konstante Spannung am Dreileitungsnetz aufrechterhalten werden. Ein weiterer Vorteil ist, dass die bei bekannten Umrichtern vorgesehene Überdimensionierung bezüglich der Modulanzahl bzw. der Batteriespannung nicht mehr erforderlich ist, da bei Ausfall eines Brückenmoduls bzw. der Batterie des Brückenmoduls die fehlende Spannung durch eine entsprechende Anhebung der Ausgangsspannungen und gegebenenfalls der Brückengleichspannungen der übrigen Brückenmodule ausgeglichen werden kann.

Bei entsprechender Auslegung des Gleichspannungswandlers kann grundsätzlich auch mit einer geringeren Anzahl von Brückenmodulen bzw. Batterien die Einrichtung im Vergleich zu unterbrechungsfreien Stromversorgungen aus dem Stand der Technik aufgebaut werden. Hierdurch lassen sich besonders kostengünstige unterbrechungsfreie Stromversorgungen realisieren.

Je nach Sicherheits- und Zuverlässigkeitsanforderungen kann in einer vorteilhaften Ausgestaltung die Reihenschaltung der Brückenmodule von vornherein überdimensioniert ausgeführt werden, d.h. es kann eine größere Anzahl von Brückenmodulen bzw. Batterien vorgesehen werden als für die Erreichung der gewünschten Ausgangsspannung an sich notwendig wäre. Es werden somit redundante Brückenmodule vorgesehen. Die gewünschte Ausgangsspannung kann durch Abwärtswandlung der Brückengleichspannungen der einzelnen Brückenmodule über deren Brückenschaltungen erfolgen. Da jedes einzelne Modul so weniger Energie bereitstellen muss, werden hierdurch einerseits die Batterien geschont. Zudem kann auch bei Ausfall einer größeren Anzahl von Brückenmodulen die gewünschte Ausgangsspannung aufrechterhalten werden. Hierdurch kann auch die Ausfallsicherheit der gesamten Einrichtung z.B. gegenüber reinen Reihenschaltungen von Batterien weiter erhöht werden.

Gemäß einer vorteilhaften Weiterbildung der Erfindung ist der Gleichspannungswandler zur Bereitstellung einer Ausgangsspannung an dem Kondensator eingerichtet, die je nach Ausführung und Steuerung des Gleichspannungswandlers höher, niedriger oder gleich der Spannung der Batterie einstellbar ist. Die Verwendung eines solchen steuerbaren Gleichspannungswandlers erlaubt eine hohe Flexibilität bei der Verwendung des Brückenmoduls bzw. einer Mehrzahl von Brückenmodulen und der Steuerung von deren Ausgangsspannung. Der Gleichspannungswandler kann als reiner Aufwärtswandler (Ausgangsspannung höher oder gleich der Batteriespannung), reiner Abwärtswandler (Ausgangsspannung niedriger oder gleich der Batteriespannung) oder als kombinierter Aufwärts-/Abwärtswandler ausgelegt sein. Vorteilhaft ist der Einsatz eines Aufwärtswandlers, da hierfür zum einen weniger Bauteile benötigt werden als für einen kombinierten Aufwärts-/Abwärtswandler und zum anderen eine geringere Batteriespannung benötigt wird, was den potentiellen Bedarf an Balanciermöglichkeiten verringert.

Gemäß einer vorteilhaften Weiterbildung der Erfindung ist der Gleichspannungswandler ein bidirektionaler Gleichspannungswandler. Hierdurch kann nicht nur in der einen Richtung die Energie für die Brückengleichspannung am mit dem Kondensator verbundenen Ausgang des Gleichspannungswandlers variabel bereitgestellt werden, sondern zusätzlich auch die Batterie mit einer von der mit dem Kondensator verbundenen Seite des Gleichspannungswandlers abgeleiteten Spannung mit einer für den jeweiligen Batteriezustand geeigneten Ladespannung geladen werden. Zusätzlich ist auch eine definierte Entladung der Batterie über den bidirektionalen Gleichspannungswandler steuerbar, z.B. zum Zweck der Formierung der Batterie.

Gemäß einer vorteilhaften Weiterbildung der Erfindung weist der Gleichspannungswandler eine Halbbrücke mit zwei elektronischen Halbleiterschaltern auf. Vorteilhaft können Halbleiterschalter des gleichen Typs verwendet werden wie für die Vollbrückenschaltung. Dies erlaubt einen einfachen und kostengünstigen Aufbau des Gleichspannungswandlers aus wenigen Bauteilen und damit einen kostengünstigen Aufbau des gesamten Brückenmoduls.

In einer vorteilhaften Weiterbildung der Erfindung sind die elektronischen Halbleiterschalter in Form eines dreiphasigen IGBT-Moduls vorgesehen. Als IGBT (Insulated Gate Bipolar Transistor) bezeichnet man ein Vierschicht-Halbleiterbauelement, das mittels eines Gates gesteuert wird. IGBTs sind eine Weiterentwicklung von Leistungs-MOSFETs. Ausgangsseitig weisen IGBTs P-N-Halbleiterübergänge auf. Somit ist ein IGBT eine Art Kombination aus einem Feldeffekt-Halbleiterbauelement und einem Bipolar-Halbleiterbauelement. IGBTs werden in der Energieversorgungstechnik häufig in Form von Modulen mit drei Halbbrücken, d.h. sechs IGBT-Halbleiterschaltern, verwendet. Solche Module sind daher einfach und kostengünstig erhältlich. Die Erfindung zeigt einen eleganten Weg auf, die in einem dreiphasigen IGBT-Modul vorhandenen sechs Halbleiterschalter bzw. drei Halbbrücken effizient für den Aufbau eines Brückenmoduls einzusetzen.

Gemäß einer vorteilhaften Weiterbildung der Erfindung ist in Reihe zu einem Brückenmodul oder einer Reihenschaltung von Brückenmodulen wenigstens eine Drossel geschaltet. Die Drossel bewirkt durch ihre Energiespeicherungseigenschaft einer Glättung des Stromverlaufs durch das Brückenmodul bzw. durch die Reihenschaltung von Brückenmodulen.

Gemäß einer vorteilhaften Weiterbildung der Erfindung ist in einer Reihenschaltung von Brückenmodulen eine Steuereinheit dazu eingerichtet, ein als defekt erkanntes Brückenmodul abzuschalten. Die Abschaltung kann durch Überbrücken der Anschlüsse des Brückenmoduls über dessen Halbleiterschalter erfolgen. Gemäß einer vorteilhaften Weiterbildung der Erfindung ist eine Steuereinheit dazu eingerichtet ist, eine als defekt erkannte Batterie eines Brückenmoduls abzuschalten. Die Abschaltung kann z.B. durch die Halbleiterschalter des Gleichspannungswandlers erfolgen. Die Steuereinheit kann eine dem Brückenmodul zugeordnete Steuereinheit, eine übergeordnete Steuereinheit für eine Mehrzahl von Brückenmodulen oder eine zentrale Steuereinheit für den gesamten Direktumrichter sein.

Die Erfindung wird nachfolgend anhand von Ausführungsbeispielen unter Verwendung von Zeichnungen näher erläutert.

Es zeigen
- Figur 1 -: eine erste Ausführung eines Brückenmoduls;
- Figur 2 -: eine zweite Ausführung eines Brückenmoduls;
- Figur 3 -: eine dritte Ausführung eines Brückenmoduls;
- Figur 4 -: einen Direktumrichter.

In den Figuren werden gleiche Bezugszeichen für einander entsprechende Elemente verwendet.

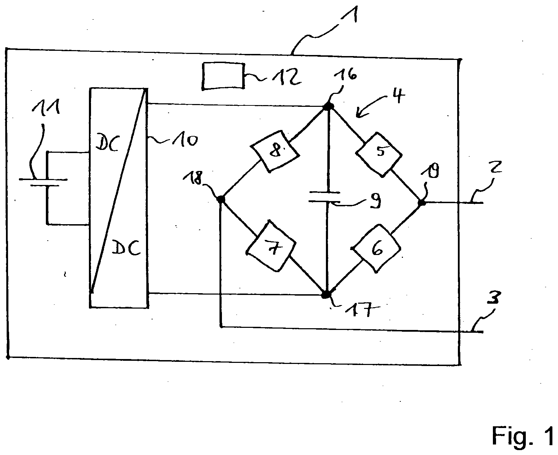

Die Figur 1 zeigt ein Brückenmodul 1, das als Einrichtung zur Einbindung wenigstens einer Batterie in ein Energieversorgungsnetz geeignet ist. Das Brückenmodul 1 weist als externe Anschlüsse einen ersten Anschluss 2 und einen zweiten Anschluss 3 auf. Die Anschlüsse 2, 3 sind die Außenverbindungen des Brückenmoduls mit einem Energieversorgungsnetz, weiteren Brückenmodulen oder sonstigen Bauelementen. Das Brückenmodul 1 weist eine Vollbrückenschaltung 4 mit vier elektronischen Halbleiterschaltern 5, 6, 7, 8 auf. Zwischen zwei gegenüberliegenden Anschlusspunkten 16, 17 der Vollbrückenschaltung 4 ist ein Bipolar-Kondensator 9 angeschlossen. Die übrigen zwei gegenüberliegenden Anschlusspunkte 18, 19 der Vollbrückenschaltung 4 sind mit den Außenanschlüssen 2, 3 verbunden. Die Anschlusspunkte 16, 17 sind mit einem steuerbaren, bidirektionalen Gleichspannungswandler 10 verbunden, der als kombinierter Aufwärts-/Abwärtswandler ausgebildet ist. Der Gleichspannungswandler ist parallel zum Kondensator 9 geschaltet. Auf der gegenüberliegenden Anschlussseite des Gleichspannungswandlers 10 ist eine mit dem Gleichspannungswandler 10 verbundene Batterie 11 vorgesehen. Das Brückenmodul 1 weist außerdem eine Steuereinheit 12 auf, z.B. in Form eines Mikroprozessors oder einer Logikschaltung. Die Steuereinheit 12 ist mit Steueranschlüssen der Halbleiterschalter 5, 6, 7, 8 sowie mit einem Steuereingang des Gleichspannungswandlers 10 verbunden. Die Steuereinheit 12 führt ein Steuerprogramm aus, mit dem die Funktion des Gleichspannungswandlers 10 sowie die Schaltzustände der Halbleiterschalter 5, 6, 7, 8 gesteuert werden. Sofern die Halbleiterschalter 5, 6, 7, 8 als IGBT ausgebildet sind, sind deren Gateanschlüsse jeweils mit der Steuereinheit 12 verbunden.

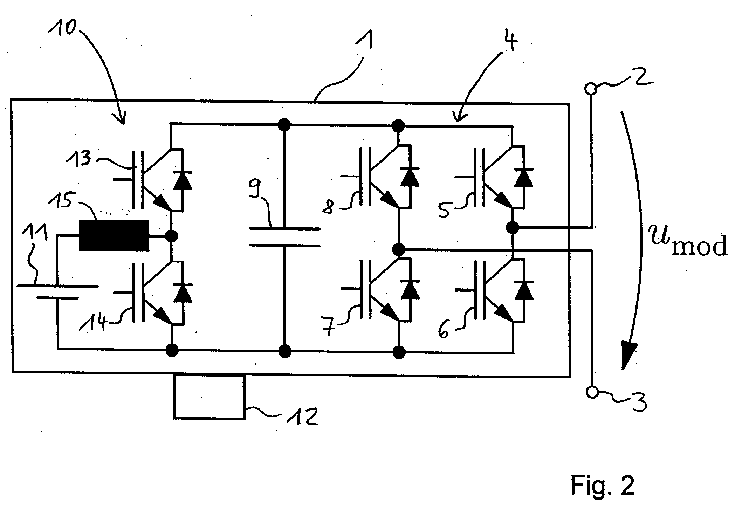

Die Figur 2 zeigt eine konkretere Ausführungsform eines Brückenmoduls 1. Die Halbleiterschalter 5, 6, 7, 8 der Vollbrücke 4 sind jeweils als IGBT ausgebildet. Ferner weist der Gleichspannungswandler 10 zwei weitere elektronische Halbleiterschalter 13, 14 auf, die als IGBT ausgebildet sind. Die Gateanschlüsse der Halbleiterschalter 13, 14 sind, ebenso wie die Gateanschlüsse der Halbleiterschalter 5, 6, 7, 8, mit der Steuereinheit 12 verbunden. Die Steuereinheit 12 führt hierüber eine Steuerung des Gleichspannungswandlers 10 durch entsprechende Ansteuerung der Halbleiterschalter 13, 14 durch. Die Halbleiterschalter 13, 14 sind in Halbbrückenschaltung angeordnet. Hierbei ist der Kollektoranschluss des Halbleiterschalters 13 mit dem Anschlusspunkt 16 der Vollbrückenschaltung 4 verbunden. Der Emitteranschluss des Halbleiterschalters 14 ist mit dem Anschlusspunkt 17 der Vollbrückenschaltung 4 verbunden. Der Emitteranschluss des Halbleiterschalters 13 ist mit dem Kollektoranschluss des Halbleiterschalters 14 sowie mit einer Drossel 15 verbunden. Die Drossel 15 ist mit einem Anschluss der Batterie 11 verbunden, z.B. mit dem Pluspol. Ein zweiter Anschluss, z.B. der Minuspol, der Batterie 11 ist mit dem Emitteranschluss des Halbleiterschalters 14 und damit mit dem Anschlusspunkt 17 der Vollbrückenschaltung 4 verbunden.

Die Verwendung der Halbleiterschalter 13, 14 sowie der Drossel 15 erlaubt einen einfachen und kostengünstigen Aufbau eines bidirektionalen, steuerbaren Gleichspannungswandlers, der damit als Aufwärtswandler ausgebildet ist. Zudem kann ein dreiphasiges IGBT-Modul verwendet werden, das bereits sechs IGBTs aufweist, die jeweils paarweise in Halbbrückenschaltung geschaltet sind. Hierbei kann eine erste Halbbrücke des IGBT-Moduls für die Anordnung der Halbleiterschalter 5, 6 verwendet werden, eine zweite Halbbrücke für die Halbleiterschalter 7, 8 und die dritte Halbbrücke für die Halbleiterschalter 13, 14.

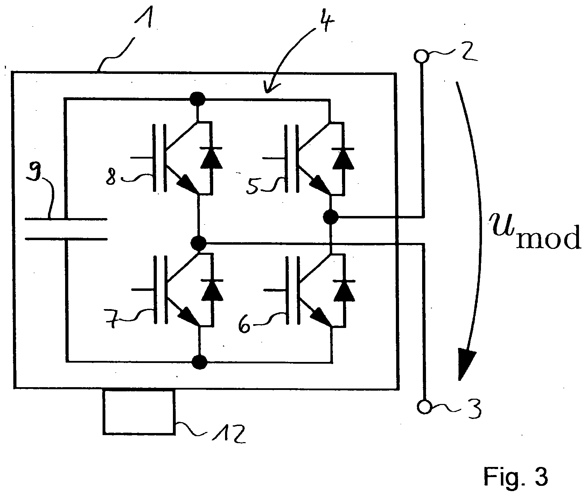

Die Figur 3 zeigt eine weitere Ausführungsform eines Brückenmoduls 1. Das Brückenmodul 1 gemäß Figur 3 ist vergleichbar aufgebaut wie das Brückenmodul 1 gemäß Figur 2, jedoch ohne den Gleichspannungswandler 10 und die Batterie 11.

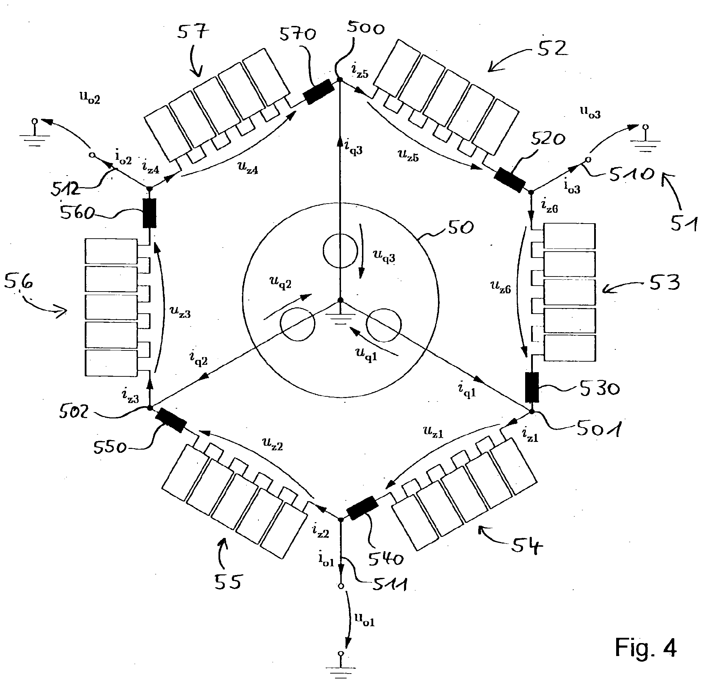

Die Figur 4 zeigt einen Direktumrichter, mit dem ein erstes Energieversorgungsnetz 50, das als Drehstromnetz ausgebildet ist, mit einem zweiten Energieversorgungsnetz 51, das ebenfalls als Drehstromnetz ausgebildet ist, verbunden wird. Zur Verbindung dienen jeweils Reihenschaltungen 52, 53, 54, 55, 56, 57 von Brückenmodulen 1, wobei die Brückenmodule wahlweise mit oder ohne Batterie und Gleichspannungswandler ausgebildet sein können. Es können hierbei Brückenmodule gemäß den Figuren 1 bis 3 eingesetzt werden, auch in Mischbestückung. In Reihe zur jeweiligen Reihenschaltung 52, 53, 54, 55, 56, 57 ist jeweils eine Drossel 520, 530, 540, 550, 560, 570 angeordnet. Die Einrichtung ist wie folgt aufgebaut:
Eine erste Reihenschaltung 52 von Brückenmodulen 1 ist einerseits an eine erste Leitung 500 des ersten Stromversorgungsnetzes 50 und andererseits an eine erste Leitung 510 des zweiten Stromversorgungsnetzes 51 angeschlossen. Eine zweite Reihenschaltung 53 von Brückenmodulen 1 ist einerseits an eine zweite Leitung 501 des ersten Stromversorgungsnetzes 50 und andererseits an die erste Leitung 510 des zweiten Stromversorgungsnetzes 51 angeschlossen. Eine dritte Reihenschaltung 54 von Brückenmodulen 1 ist einerseits an die zweite Leitung 501 des ersten Stromversorgungsnetzes 50 und andererseits an eine zweite Leitung 511 des zweiten Stromversorgungsnetzes 51 angeschlossen. Eine vierte Reihenschaltung 55 von Brückenmodulen 1 ist einerseits an eine dritte Leitung 502 des ersten Stromversorgungsnetzes 50 und andererseits an die zweite Leitung 511 des zweiten Stromversorgungsnetzes 51 angeschlossen. Eine fünfte Reihenschaltung 56 von Brückenmodulen 1 ist einerseits an die dritte Leitung 502 des ersten Stromversorgungsnetzes 50 und andererseits an eine dritte Leitung 512 des zweiten Stromversorgungsnetzes 51 angeschlossen. Eine sechste Reihenschaltung 57 von Brückenmodulen 1 ist einerseits an die erste Leitung 500 des ersten Stromversorgungsnetzes 50 und andererseits an die dritte Leitung 512 des zweiten Stromversorgungsnetzes 51 angeschlossen.

Die in Figur 4 gezeigte Topologie erlaubt bei entsprechender Steuerung von batteriebestückten Brückenmodulen 1 die Realisierung einer unterbrechungsfreien Stromversorgung in dem Energieversorgungsnetz. Zudem kann über die Brückenmodule 1 eine Blindleistungskompensation sowie eine Kompensation von Schwankungen des Energiebedarfs bzw. beim Einsatz zur Anbindung eines Generators an ein Energieversorgungsnetz eine Kompensation von Schwankungen der bereitgestellten Energie erfolgen. Zur Koordination der Steuerung der Mehrzahl der Brückenmodule 1 kann eine gemeinsame Steuereinheit vorgesehen werden, die mit den einzelnen Steuereinheiten 12 der Brückenmodule 1 über Datenkommunikation in Verbindung steht. Die gemeinsame Steuereinheit steuert die Brückengleichspannungen der einzelnen Brückenmodule sowie die von den einzelnen Brückenmodulen abgegebenen Ausgangsspannungen.

## Patentansprüche

1. Transformatorloser Direktumrichter zur Verbindung eines ersten Dreileitungsnetzes (50), insbesondere ein Drehstromnetz, mit einem zweiten Dreileitungsnetz (51), insbesondere ein Drehstromnetz, mittels elektronische Halbleiterschalter (5, 6, 7, 8) aufweisenden Brückenmodulen (1), mit folgenden Merkmalen:
a) ein erstes Brückenmodul (1) oder eine erste Reihenschaltung (52) von Brückenmodulen (1) ist einerseits an eine erste Leitung (500) des ersten Stromversorgungsnetzes (50) und andererseits an eine erste Leitung (510) des zweiten Stromversorgungsnetzes (51) angeschlossen,
b) ein zweites Brückenmodul (1) oder eine zweite Reihenschaltung (53) von Brückenmodulen (1) ist einerseits an eine zweite Leitung (501) des ersten Stromversorgungsnetzes (50) und andererseits an die erste Leitung (510) des zweiten Stromversorgungsnetzes (51) angeschlossen,
c) ein drittes Brückenmodul (1) oder eine dritte Reihenschaltung (54) von Brückenmodulen (1) ist einerseits an die zweite Leitung (501) des ersten Stromversorgungsnetzes (50) und andererseits an eine zweite Leitung (511) des zweiten Stromversorgungsnetzes (51) angeschlossen,
d) ein viertes Brückenmodul (1) oder eine vierte Reihenschaltung (55) von Brückenmodulen (1) ist einerseits an eine dritte Leitung (502) des ersten Stromversorgungsnetzes (50) und andererseits an die zweite Leitung (511) des zweiten Stromversorgungsnetzes (51) angeschlossen,
e) ein fünftes Brückenmodul (1) oder eine fünfte Reihenschaltung (56) von Brückenmodulen (1) ist einerseits an die dritte Leitung (502) des ersten Stromversorgungsnetzes (50) und andererseits an eine dritte Leitung (512) des zweiten Stromversorgungsnetzes (51) angeschlossen,
f) ein sechstes Brückenmodul (1) oder eine sechste Reihenschaltung (57) von Brückenmodulen (1) ist einerseits an die erste Leitung (500) des ersten Stromversorgungsnetzes (50) und andererseits an die dritte Leitung (512) des zweiten Stromversorgungsnetzes (51) angeschlossen,
**dadurch gekennzeichnet, dass** der Direktumrichter genau sechs Brückenmodule oder Reihenschaltungen davon aufweist.

2. Direktumrichter nach Anspruch 1, **dadurch gekennzeichnet, dass** wenigstens ein Brückenmodul (1) folgende Merkmale aufweist:
a) das Brückenmodul (1) weist einen ersten und einen zweiten Anschluss (2, 3) zur Verbindung mit einer Leitung (500, 501, 502, 510, 511, 512) des Energieversorgungsnetzes (50, 51) oder einem Anschluss (2, 3) eines weiteren Brückenmoduls (1) auf,
b) das Brückenmodul (1) weist vier elektronische Halbleiterschalter (5, 6, 7, 8) in Vollbrückenschaltung (4) auf,
c) der erste und der zweite Anschluss (2, 3) des Brückenmoduls (1) ist mit einander gegenüberliegenden Anschlusspunkten (18, 19) der Vollbrückenschaltung (4) verbunden,
d) das Brückenmodul (1) weist einen Kondensator (9) auf, der mit den weiteren einander gegenüberliegenden Anschlusspunkten (16, 17) der Vollbrückenschaltung (4) verbunden ist.

3. Direktumrichter nach einem der vorhergehenden Ansprüche, **dadurch gekennzeichnet, dass** wenigstens ein Brückenmodul (1) folgende Merkmale aufweist:
a) das Brückenmodul (1) weist eine Batterie (11) auf,
b) das Brückenmodul (1) weist einen Gleichspannungswandler (10) auf, dessen eine Anschlussseite parallel zum Kondensator (9) angeschlossen ist und an dessen andere Anschlussseite die Batterie (11) angeschlossen ist.

4. Direktumrichter nach Anspruch 3, **dadurch gekennzeichnet, dass** der Gleichspannungswandler (10) zur Bereitstellung einer Ausgangsspannung an dem Kondensator (9) eingerichtet ist, die je nach Steuerung des Gleichspannungswandlers (10) höher, niedriger oder gleich der Spannung der Batterie (11) einstellbar ist.

5. Direktumrichter nach Anspruch 3 oder 4, **dadurch gekennzeichnet, dass** der Gleichspannungswandler (10) ein bidirektionaler Gleichspannungswandler ist.

6. Direktumrichter nach einem der Ansprüche 3 bis 5, **dadurch gekennzeichnet, dass** der Gleichspannungswandler (10) eine Halbbrücke mit zwei elektronischen Halbleiterschaltern (13, 14) aufweist.

7. Direktumrichter nach Anspruch 6, **dadurch gekennzeichnet, dass** die elektronischen Halbleiterschalter (5, 6, 7, 8, 13, 14) in Form eines dreiphasigen IGBT-Moduls vorgesehen sind.

8. Direktumrichter nach wenigstens einem der vorhergehenden Ansprüche, **dadurch gekennzeichnet, dass** in Reihe zu einem Brückenmodul (1) oder einer Reihenschaltung (52, 53, 54, 55, 56, 57) von Brückenmodulen (1) wenigstens eine Drossel (520, 530, 540, 550, 560, 570) geschaltet ist.

9. Direktumrichter nach wenigstens einem der vorhergehenden Ansprüche, **dadurch gekennzeichnet, dass** in einer Reihenschaltung (52, 53, 54, 55, 56, 57) von Brückenmodulen (1) eine Steuereinheit dazu eingerichtet ist, ein als defekt erkanntes Brückenmodul (1) abzuschalten.

10. Direktumrichter nach wenigstens einem der Ansprüche 3 bis 9, **dadurch gekennzeichnet, dass** eine Steuereinheit dazu eingerichtet ist, eine als defekt erkannte Batterie (11) eines Brückenmoduls (1) abzuschalten.

## Claims

1. Transformerless AC/AC converter for connecting a first three-conductor grid (50), in particular a three-phase grid, to a second three-conductor grid (51), in particular a three-phase grid, by means of bridge modules (1) having electronic semiconductor switches (5, 6, 7, 8), with the following features:
a) a first bridge module (1) or a first series circuit (52) of bridge modules (1) is connected on one side to a first conductor (500) of the first power supply grid (50) and on the other side to a first conductor (510) of the second power supply grid (51),
b) a second bridge module (1) or a second series circuit (53) of bridge modules (1) is connected on one side to a second conductor (501) of the first power supply grid (50) and on the other side to the first conductor (510) of the second power supply grid (51),
c) a third bridge module (1) or a third series circuit (54) of bridge modules (1) is connected on one side to the second conductor (501) of the first power supply grid (50) and on the other side to a second conductor (511) of the second power supply grid (51),
d) a fourth bridge module (1) or a fourth series circuit (55) of bridge modules (1) is connected on one side to a third conductor (502) of the first power supply grid (50) and on the other side to the second conductor (511) of the second power supply grid (51),
e) a fifth bridge module (1) or a fifth series circuit (56) of bridge modules (1) is connected on one side to the third conductor (502) of the first power supply grid (50) and on the other side to a third conductor (512) of the second power supply grid (51),
f) a sixth bridge module (1) or a sixth series circuit (57) of bridge modules (1) is connected on one side to the first conductor (500) of the first power supply grid (50) and on the other side to the third conductor (512) of the second power supply grid (51),
**characterised in that** the AC/AC converter has exactly six bridge modules or series circuits thereof.

2. AC/AC converter according to claim 1, **characterised in that** at least one bridge module (1) has the following features:
a) the bridge module (1) has a first and a second terminal (2, 3) for connection to a conductor (500, 501, 502, 510, 511, 512) of the power supply grid (50, 51) or a terminal (2, 3) of a further bridge module (1),
b) the bridge module (1) has four electronic semiconductor switches (5, 6, 7, 8) in a full bridge circuit (4),
c) the first and the second terminals (2, 3) of the bridge module (1) are connected to connection points (18, 19), opposite one another, of the full bridge circuit (4),
d) the bridge module (1) has a capacitor (9) which is connected to the further connection points (16, 17), opposite one another, of the full bridge circuit (4).

3. AC/AC converter according to one of the preceding claims, **characterised in that** at least one bridge module (1) has the following features:
a) the bridge module (1) has a battery (11),
b) the bridge module (1) has a DC-DC converter (10), one terminal side thereof being connected parallel to the capacitor (9) and the battery (11) being connected to the other terminal side thereof.

4. AC/AC converter according to claim 3, **characterised in that** the DC-DC converter (10) is set up to provide an output voltage at the capacitor (9), which depending on the control of the DC-DC converter (10) can be adjusted to be higher than, lower than or equal to the voltage of the battery (11).

5. AC/AC converter according to claim 3 or 4, **characterised in that** the DC-DC converter (10) is a bidirectional DC-DC converter.

6. AC/AC converter according to one of claims 3 to 5, **characterised in that** the DC-DC converter (10) has a half-bridge with two electronic semiconductor switches (13, 14).

7. AC/AC converter according to claim 6, **characterised in that** the electronic semiconductor switches (5, 6, 7, 8, 13, 14) are provided in the form of a three-phase IGBT module.

8. AC/AC converter according to at least one of the preceding claims, **characterised in that** at least one choke (520, 530, 540, 550, 560, 570) is switched in series with a bridge module (1) or a series circuit (52, 53, 54, 55, 56, 57) of bridge modules (1).

9. AC/AC converter according to at least one of the preceding claims, **characterised in that** a control unit is set up to disable a bridge module (1) detected as defective in a series circuit (52, 53, 54, 55, 56, 57) of bridge modules (1).

10. AC/AC converter according to at least one of claims 3 to 9, **characterised in that** a control unit is set up to disable a battery (11), detected as defective, of a bridge module (1).

## Revendications

1. Convertisseur direct sans transformateur de liaison d'un premier réseau (50) à trois lignes, notamment d'un réseau triphasé, à un deuxième réseau (51) à trois lignes, notamment à un réseau triphasé, au moyen de modules (1) de pont ayant des interrupteurs (5, 6, 7, 8) électroniques à semi-conducteur, ayant les caractéristiques suivantes :
a) un premier module (1) de pont, ou un premier circuit (52) série de modules (1) de pont, est relié d'une part à une première ligne (500) du premier réseau (50) d'alimentation en courant, et d'autre part à une première ligne (510) du deuxième réseau (51) d'alimentation en courant,
b) un deuxième module (1) de pont, ou un deuxième circuit (53) série de modules (1) de pont, est relié d'une part à une deuxième ligne (501) du premier réseau (50) d'alimentation en courant, et d'autre part à la première ligne (510) du deuxième réseau (51) d'alimentation en courant,
c) un troisième module (1) de pont, ou un troisième circuit (54) série de modules (1) de pont, est relié d'une part à la deuxième ligne (501) du premier réseau (50) d'alimentation en courant, et d'autre part à une deuxième ligne (511) du deuxième réseau (51) d'alimentation en courant,
d) un quatrième module (1) de pont, ou un quatrième circuit (55) série de modules (1) de pont, est relié d'une part à une troisième ligne (502) du premier réseau (50) d'alimentation en courant, et d'autre part à la deuxième ligne (511) du deuxième réseau (51) d'alimentation en courant,
e) un cinquième module (1) de pont, ou un cinquième circuit (56) série de modules (1) de pont, est relié d'une part à la troisième ligne (502) du premier réseau (50) d'alimentation en courant, et d'autre part à une troisième ligne (512) du deuxième réseau (51) d'alimentation en courant,
f) un sixième module (1) de pont, ou un sixième circuit (57) série de modules (1) de pont, est relié d'une part à la première ligne (500) du premier réseau (50) d'alimentation en courant, et d'autre part à la troisième ligne (512) du deuxième réseau (51) d'alimentation en courant,
**caractérisé en ce que** le convertisseur direct a exactement six modules de pont ou circuits série de ceux-ci.

2. Convertisseur direct suivant la revendication 1, **caractérisé en ce qu'**au moins un module (1) de pont a les caractéristiques suivantes :
a) le module (1) de pont a une première et une deuxième bornes (2, 3) de liaison à une ligne (500, 501, 502, 510, 511, 512) du réseau (50, 51) d'alimentation en énergie ou à une borne (2, 3) d'un autre module (1) de pont,
b) le module (1) de pont a quatre interrupteurs (5, 6, 7, 8) électroniques à semi-conducteur en circuit (4) à pont complet,
c) la première et la deuxième borne (2, 3) du module (1) de pont sont reliées à des points (18, 19) de connexion opposés l'un à l'autre du circuit (4) en pont complet,
d) le module (1) de pont a un condensateur (9), qui est relié aux autres points (16, 17) de connexion opposés l'un à l'autre du circuit (4) en pont complet.

3. Convertisseur direct suivant l'une des revendications précédentes, **caractérisé en ce qu'**au moins un module (1) de pont a les caractéristiques suivantes :
a) le module (1) de pont a une batterie (11),
b) le module (1) de pont a un transformateur (10) de tension continue, dont un côté de connexion est monté en parallèle au condensateur (9) et dont l'autre côté de connexion est relié à la batterie (11).

4. Convertisseur direct suivant la revendication 3, **caractérisé en ce que** le transformateur (10) de tension continue est conçu pour mettre à la disposition du condensateur (9) une tension de sortie, qui, suivant la commande du transformateur (10) de tension continue, est réglable de manière à être plus haute, plus basse ou égale à la tension de la batterie (11).

5. Convertisseur direct suivant la revendication 3 ou 4, **caractérisé en ce que** le transformateur (10) de tension continue est un transformateur de tension continue bidirectionnel.

6. Convertisseur direct suivant l'une des revendications 3 à 5, **caractérisé en ce que** le transformateur (10) de tension continue a un demi-pont ayant deux interrupteurs (13, 14) électroniques à semi-conducteur.

7. Convertisseur direct suivant la revendication 6, **caractérisé en ce que** les interrupteurs (5, 6, 7, 8, 13, 14) électroniques à semi-conducteur sont prévus sous la forme d'un module IGBT triphasé.

8. Convertisseur direct suivant au moins l'une des revendications précédentes, **caractérisé en ce qu'**au moins une bobine (520, 530, 540, 550, 560, 570) est montée en série avec un module (1) de pont ou avec un circuit (52, 53, 54, 55, 56, 57) série de module (1) de fond.

9. Convertisseur direct suivant l'une des revendications précédentes, **caractérisé en ce que**, dans le circuit (52, 53, 54, 55, 56, 57) série de module (1) de pont, une unité de commande est agencée pour mettre hors circuit un module (1) de pont reconnu comme défectueux.

10. Convertisseur direct suivant au moins l'une des revendications 3 à 9, **caractérisé en ce qu'**une unité de commande est conçue pour mettre hors circuit une batterie (11) reconnue défectueuse d'un module (1) de pont.
